# EUROPEAN PATENT SPECIFICATION

(11) **EP 2 572 344 B1**
(45) Date of publication and mention of the grant of the patent: **05.08.2015**
(21) Application number: 10722309.1
(22) Date of filing: 21.05.2010
(51) Int. Cl.: G09B 9/02, G09B 9/12, G09B 9/46

(54) **MOTION SIMULATOR AND CORRESPONDING METHOD**
BEWEGUNGSSIMULATOR UND ENTSPRECHENDES VERFAHREN
SIMULATEUR DE MOUVEMENT ET METHODE CORRESPONDANTE

(43) Date of publication of application: 27.03.2013
(73) Proprietor: Max-Planck-Gesellschaft zur Förderung der Wissenschaften e.V., 80539 München (DE)
(72) Inventor: BÜLTHOFF, Heinrich H., 72076 Tübingen (DE); TEUFEL, Harald, 72768 Reutlingen (DE); KERGER, Michael, 72147 Nehren (DE)
(74) Representative: Beier, Ralph
(86) International application number: PCT/EP2010/003132
(87) International publication number: WO 2011/144228

(56) References cited:
- Hans-Günther Nusseck, Harald Teufel: "The MPI Motion Simulator", , 19 February 2009 (2009-02-19), XP002639730, Retrieved from the Internet: URL:http://web.archive.org/web/20090219021 235/http://cyberneum.de/PDF/MotionSimulato r_w.pdf [retrieved on 2011-05-31]
- Anonymous: "Heli Trainer sets new standards in pilot training", , 19 May 2010 (2010-05-19), pages 1-3, XP002639720, Retrieved from the Internet: URL:http://www.kuka-robotics.com/usa/en/pr essevents/news/print/NN_100519_Heli_Traine r.htm [retrieved on 2011-05-31]
- Anonymous: "Linear units for horizontal robot traverse", Robotics online , 15 May 2008 (2008-05-15), pages 1-1, XP002639737, Retrieved from the Internet: URL:http://www.robotics.org/product-catalo g-detail.cfm/KUKA-Robotics-Corporation/Lin ear-units-for-horizontal-robot-traverse/pr oductid/1768 [retrieved on 2011-05-31]
- Nusseck et. al: "Learning System Dynamics:Transfer of Training in a Helicopter Hover Simulator", AIAA Modeling and Simulation Technologies Conference and Exhibit , 21 August 2008 (2008-08-21), pages 1-11, XP002639719, 18 - 21 August 2008, Honolulu, Hawaii Retrieved from the Internet: URL:http://www.kyb.mpg.de/fileadmin/user_u pload/files/publications/attachments/AIAA2 008-Nusseck_5340%5B0%5D.pdf [retrieved on 2011-05-31]

## Description

### Field of the invention

The invention relates to a motion simulator for simulating a motion of a vehicle, particularly an aircraft like a helicopter. Further, the invention relates to a corresponding method for simulating a motion of a vehicle.

### Background of the invention

The use of a multi-axis serial robot for simulating a motion of a vehicle is disclosed, for example in Nusseck/Teufel/Nieuwenhuizen/Bülthoff: "Learning System Dynamics: Transfer of Training in a Helicopter Hover Simulator", AIAA Modeling and Simulation Technologies Conference and Exhibit, 18-21 August 2008, Honolulu, Hawaii. Further, it is well-known in the state of the art to use a so-called Stewart platform for simulating a motion of a vehicle. However, both the conventional Stewart platform and the multi-axis serial robot suffer from the fundamental drawback that the workspace of these manipulators is limited, so that it is difficult or almost impossible to simulate long-lasting accelerations or decelerations.

A motion simulator according to the preamble of the main claim is known from Hans-Günter Nusseck, Harald Teufel: "The MPI motion simulator", February 19, 2009 (published on the internet). However, this conventional motion simulator uses the distal robot arm to achieve some orientations of the cabin. Further, some orientations of the cabin cannot be achieved with this conventional robot since it comprises hardware end stops. Therefore, it is not possible to achieve sufficient centrifugal forces in all possible orientations of the cabin.

Further, reference is made to Anonymous: "Heli Trainer sets new standards in pilot training", XP 002639720, Anonymous: "Linear units for horizontal robot traverse", XP 002639737 and Nusseck et al.: "Learning System Dynamics: Transfer of Training in a Helicopter Hover Simulator", XP 002639719.

### Summary of the invention

Therefore, it is an object of the invention to improve the simulation of long-lasting accelerations or decelerations.

This object is achieved by a novel motion simulator and a corresponding method according to the independent claims.

The invention is based on the basic idea to simulate long-lasting accelerations or decelerations by generating a centrifugal force acting on the operator, wherein the centrifugal forces are generated by rotating the multi-axis serial robot around a preferably vertical axis of rotation, e.g. around the robot base.

The motion simulator according to the invention comprises a multi-axis serial robot comprising a rotatable base axis. Such a multi-axis serial robot is per se well known and commercially available, e.g. from German company KUKA Roboter GmbH.

Further, the motion simulator according to the invention comprises a seat for an operator, wherein the seat is attached to the multi-axis serial robot, so that the seat can be moved in space by the multi-axis serial robot for simulation of a real movement of a vehicle. Insofar, the motion simulator according to the invention corresponds to the conventional motion simulator as disclosed, for example, in the afore-mentioned publication titled "Learning System Dynamics: Transfer of Training in a Helicopter Hover Simulator".

However, the motion simulator according to the invention distinguishes from the conventional motion simulator in that it is adapted to simulate a long-lasting acceleration or deceleration by generating a centrifugal force acting on the operator in the seat of the motion simulator. For this purpose, the rotatable base axis of the multi-axis serial robot is preferably indefinitely rotatable, so that long-lasting centrifugal forces can be generated without any time restrictions.

Therefore, the rotatable base axis of the motion simulator according to the invention is distinguished from the afore-mentioned conventional motion simulator in that it comprises a slip ring making an electrical connection between the rotatable parts of the rotatable axis, wherein the slip ring allows an unlimited rotation of the rotatable base axis which is important for generating long-lasting centrifugal forces. Further, the rotatable base axis preferably comprises a rotary feed-through making a pneumatic or hydraulic connection between the rotatable parts of the rotatable base axis, wherein the rotary feed-through allows an unlimited rotation of the rotatable base axis.

In a preferred embodiment of the invention, the motion simulator additionally comprises a linear axis, wherein the multi-axis serial robot is moveable along the linear axes, so that the work space of the multi-axis serial robot is expanded thereby making the simulation more realistic. In other words, the entire multi-axis serial robot can be moved along the linear axis in order to simulate long-lasting accelerations or decelerations acting on the operator. The linear axis preferably allows a linear movement of the multi-axis serial robot of more than 2m, 4m, 6m, 8m or even more than 10m.

It should further be noted that the linear axis can be curved or even ring-shaped which allows an endless movement of the multi-axis serial robot on the linear axis. Moreover, it is possible to arrange more than one linear axis thereby creating a corresponding number of additional degrees of freedom of movement.

According to the invention, the seat is attached to a tool center point (TCP) of the multi-axis serial robot by an additional seat axis providing an additional degree of freedom of movement, wherein the seat axis allows a movement of the seat relative to the tool center point of the multi-axis serial robot. Preferably, the seat axis is attached to the mounting flange of a hand wrist of the multi-axis serial robot.

The seat axis allows at least a rotation of the seat in the sagittal plane of the operator in the seat. In other words, the seat axis allows a forwards and rearwards directed tilt movement of the operator in the seat. It should further be noted that the seat axis preferably allows a rotary movement of at least 90° in the sagittal plane of the operator in the seat.

Further, it is possible that the seat axis allows at least a rotation of the seat in the transversal plane and/or in the frontal plane of the operator in the seat. The rotation of the seat can be realized by a corresponding movement of the seat axis alone. However, the rotation of the seat is preferably realized by a combination of movements of the seat axis and other axes of the multi-axis serial robot.

In the preferred embodiment of the invention, the seat can be aligned such that the centrifugal force caused by the rotation of the multi-axis serial robot around the base axis is cranially directed with regard to the operator. In other words, the centrifugal force is aligned vertically upwards with regard to the operator in the seat of the motion simultor

Further, the seat can be preferably aligned such that the centrifugal force caused by the rotation of the multi-axis serial robot around the base axis is caudally directed with regard to the operator in the seat. In other words, the seat can be aligned such that the centrifugal force is aligned vertically downwards relative to the operator in the seat.

Alternatively, the seat can be aligned such that the centrifugal force caused by the rotation of the multi-axis serial robot around the base axis is ventrally directed with regard to the operator. In other words, the seat can be aligned in such a way that the operator in the seat perceives a forwards directed centrifugal force.

Alternatively, the seat can be aligned in such a way that the centrifugal force is aligned dorsally or laterally.

In the preferred embodiment of the invention, the seat axis comprises a curved guide rail and a carriage which is moveable along the guide rail, wherein the carriage is preferably attached to the tool center point (e.g. the mounting flange of the hand wrist) of the multi-axis serial robot, while the guide rail is attached to the seat, so that the seat is moveable relative to the tool center point of the multi-axis serial robot. In other words, the guide rail along with the seat can be moved along the carriage thereby rotating the seat according to the curvature of the guide rail. Therefore, the guide rail is preferably substantially L-shaped, C-shaped, O-shaped, circular or elliptical. However, it should be noted that it is alternatively possible that the carriage is attached to the seat for the operator, while the curved guide rail is attached to the tool center point of the multi-axis serial robot. The afore-mentioned design of the seat axis allows a rotation of the operator in the seat around a laterally aligned axis of rotation. In other words, the seat axis allows a tilt movement forwards and backwards.

It should further be noted that the seat is preferably arranged in a closed cabin so that the operator in the seat does not perceive any tilt of the cabin relative to the real world but merely feels corresponding forces.

Further, the cabin preferably comprises at least one visual display, particularly a projection display and/or a stereoscopic display. Moreover, it should be noted that the cabin preferably resembles the cabin or cockpit of the vehicle to be simulated, e.g. a real helicopter.

In the preferred embodiment of the invention, the motion simulator comprises a hardware limit stop limiting the motion space of the multi-axis serial robot to avoid a collision. Further, the motion simulator preferably comprises a software limit stop limiting the motion space of the multi-axis serial robot to avoid a collision. Further, there is preferably a multi-step safety arrangement comprising software end stops in an operating program of the motion simulator, software end stops in a robot controller and also hardware end stops in the multi-axis serial robot.

Finally, it should be noted that the invention is not restricted to a motion simulator as described above but also encompasses a corresponding method for simulating a motion of a vehicle.

The invention and its particular features and advantages will become more apparent from the following detailed description considered with reference to the accompanying drawings.

### Brief description of the drawings

- Figures 1-4: illustrate a preferred embodiment of a motion simulator according to the invention in different positions.
- Figures 5 and 6: illustrate different positions of a cabin of the motion simulator as shown in Figures 1-4.
- Figure 7: shows a side view of an alternative embodiment of a motion simulator according to the invention additionally comprising a linear axis.
- Figure 8: shows a scheme illustrating the anatomical terms of location as used in the description.

### Detailed description of the drawings

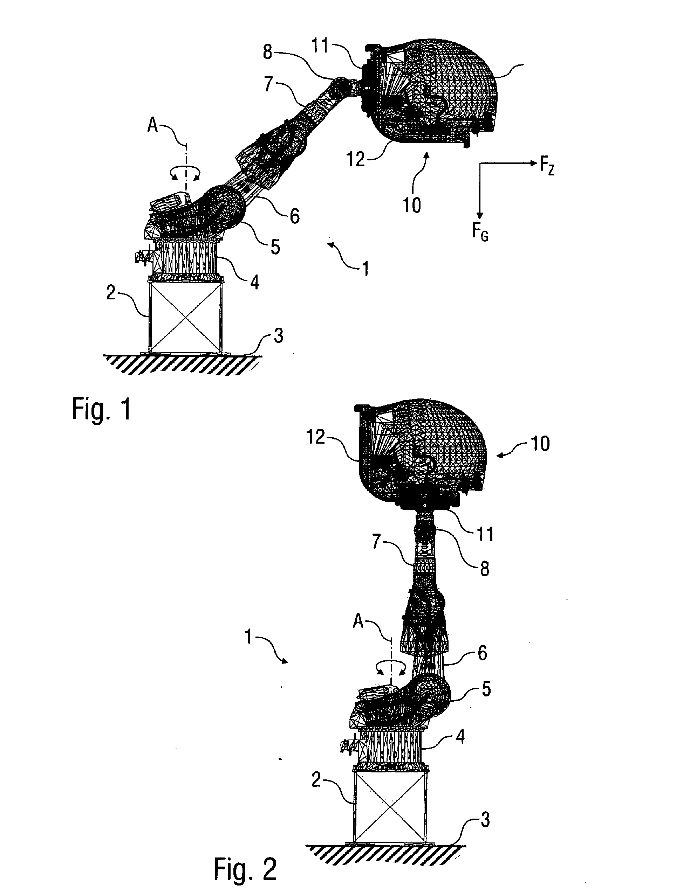

Figures 1-6 illustrate a first embodiment of a motion simulator according to the invention, wherein the motion simulator is adapted for simulating a motion of a helicopter. However, the motion simulator could alternatively be adapted for simulation of a motion of any other type of vehicle, e.g. airplanes.

The motion simulator comprises a multi-axis serial robot 1 which is per se known in the state of the art and commercially available, e.g. from German company KUKA Roboter GmbH.

The multi-axis serial robot 1 comprises a robot base 2 which is fixed to a foundation 3.

Further, the multi-axis serial robot 1 comprises a rotatable base axis 4 carrying a rotatable robot link 5, wherein the robot link 5 is rotatable relative to the robot base 2 around a vertical axis of rotation A.

Moreover, the multi-axis serial robot 1 comprises two pivotable robot arms 6, 7 and a conventional hand wrist 8, wherein the hand wrist 8 provides three degrees of freedom of movement, so that the multi-axis serial robot 1 comprises a total of six degrees of freedom of movement.

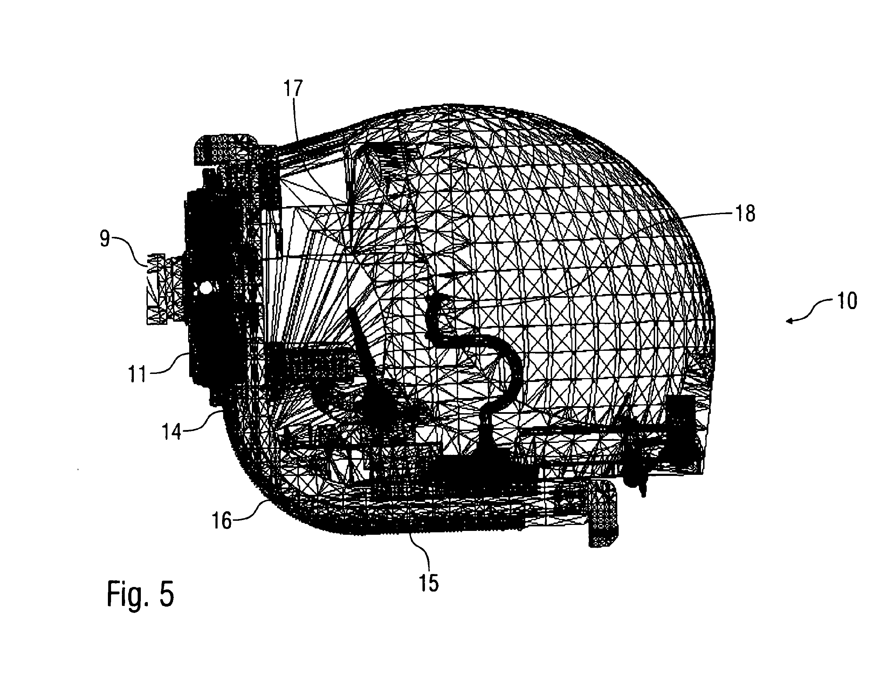

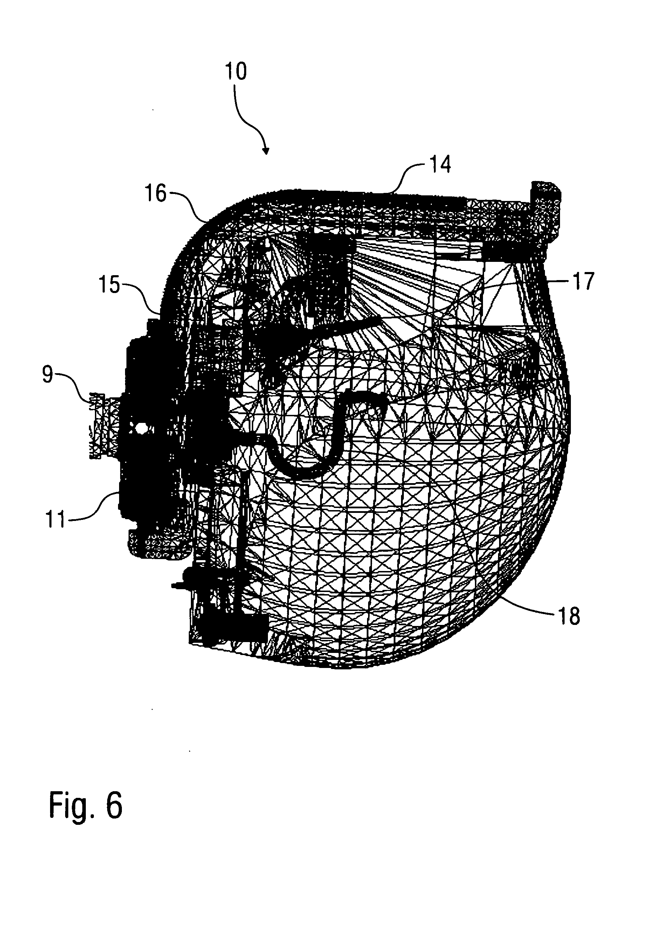

The hand wrist 8 comprises a mounting flange 9 to which a cabin arrangement 10 (cf. Figures 5 and 6) is mounted via an additional seat axis.

The seat axis essentially consists of a carriage 11 attached to the mounting flange 9 of the hand wrist 8 and a curved guide rail 12 fixedly attached to a cabin 13 of the cabin arrangement 10.

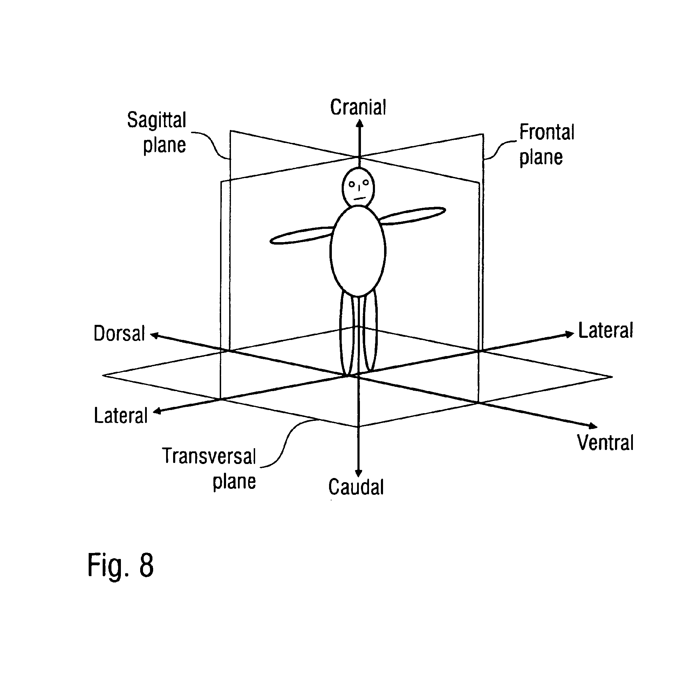

The guide rail 12 is substantially L-shaped and comprises two arms 14, 15, wherein the arms 14, 15 are orthogonally aligned and connected by a curved section 16 of the guide rail 12. The guide rail 12 can be moved linearly relative to the carriage 11 thereby tilting the entire cabin arrangement 10 in a sagittal plane (cf. Figure 8).

Further, it should be noted that the cabin arrangement 10 comprises a seat 17 for the operator and a control stick 18, wherein both the seat 17 and the control stick 18 are arranged inside the cabin 13.

Moreover, the cabin arrangement 10 comprises a stereoscopic display inside the cabin 13 so that the operator perceives a stereoscopic image of the simulated environment thereby improving the realistic awareness of the simulation.

Figure 1 shows a first orientation of the cabin arrangement 10 which is aligned horizontally. Further, the robot link 5 is rotated around the axis of rotation A around the robot base 2, so that the operator in the seat 17 of the cabin 13 arrangement 10 perceives a centrifugal force which is ventrally aligned (cf. Figure 8).

Figure 2 shows an alternative orientation of the cabin arrangement 10, which is also horizontally aligned. However, the distance between the seat 17 for the operator and the axis of rotation A is almost zero, so that the cabin arrangement 10 can be re-orientated without causing any substantial centrifugal forces.

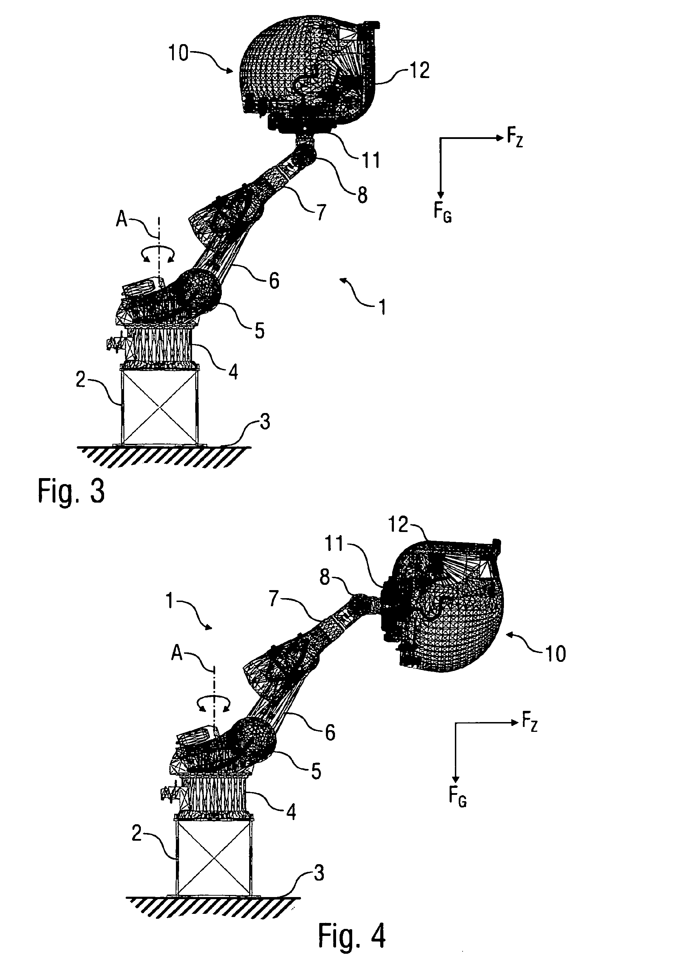

Figure 3 shows a different orientation of the cabin arrangement 10, in which the operator in the seat 17 faces the axis of rotation A. Therefore, the operator in the seat 17 perceives the centrifugal forces as a dorsally directed force (cf. Figure 8).

It should be noted that the orientation of the cabin arrangement 10 as shown in Figure 3 would not be possible without the additional seat axis consisting of the carriage 11 and the guide rail 12. Further, the seat axis allows a simulation of a forwards acceleration by continuously rotating the cabin arrangement 10 around the axis of rotation A.

A comparison of Figures 1 and 4 illustrates the movement which is realized by a gliding movement of the carriage 11 relative to the curved guide rail 12. The displacement of the contact point between the guide rail 12 and the carriage 11 is necessary to achieve the orientation of the cabin arrangement 10 as shown in Figure 3.

Moreover, Figure 4 shows another orientation of the cabin arrangement 10, wherein the cabin arrangement 10 is tilted forwards by an angle of 90°, so that the operator in the seat 17 looks downwards to the foundation 3. Therefore, the operator in the seat 17 perceives the centrifugal force generated by the rotation of the multi-axis serial robot 1 as a cranially directed force (cf. Figure 8).

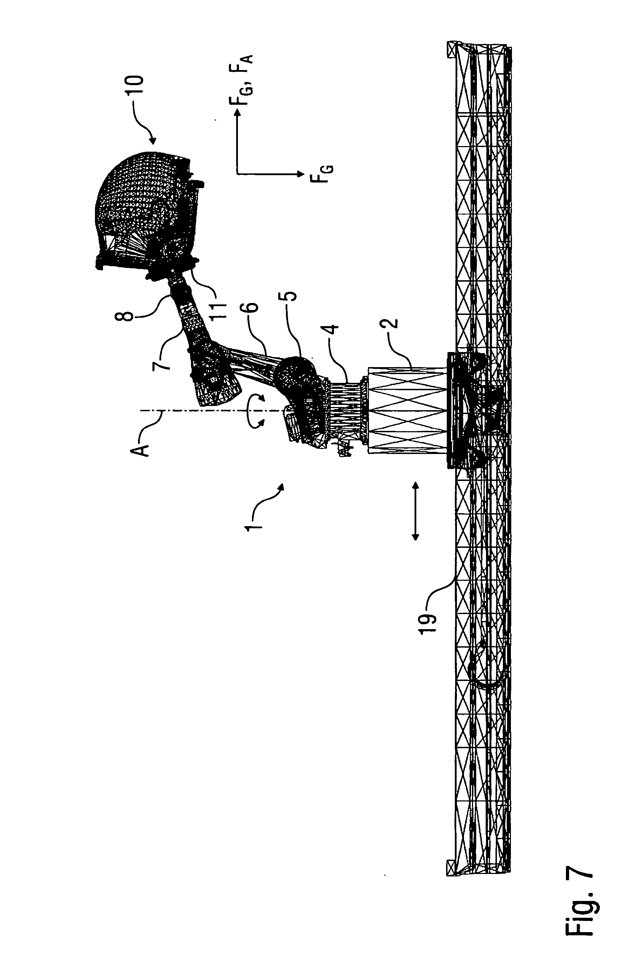

Figure 7 illustrates an alternative embodiment of the invention which corresponds to the embodiment according to Figures 1-6 to a large extent. Therefore, reference is made to the above description and the same reference numerals are used for corresponding parts and details.

One characteristic of this embodiment is that the motion simulator additionally comprises a linear axis 19, wherein the robot base 2 is mounted on the linear axis 19, so that the multi-axis serial robot 1 can be moved along the linear axis 19 in the direction of the arrows.

Therefore, the linear axis 19 expands the work space of the motion simulator thereby improving the realistic awareness of the simulation.

Although the invention has been described with reference to the particular arrangement of parts, features and the like, these are not intended to exhaust all possible arrangements of features, and indeed many other modifications and variations will be ascertainable to those skilled in the art.

### List of reference numerals:

- 1: Multi-axis serial robot
- 2: Robot base
- 3: Foundation
- 4: Base axis
- 5: Robot link
- 6: Robot arm
- 7: Robot arm
- 8: Hand wrist
- 9: Mounting flange of the hand wrist
- 10: Cabin arrangement
- 11: Carriage
- 12: Guide rail
- 13: Cabin
- 14: Arm of the guide rail
- 15: Arm of the guide rail
- 16: Curved section of the guide rail
- 17: Seat
- 18: Control stick
- 19: Linear axis
- A: Axis of rotation

## Claims

1. Motion simulator for simulating a motion of a vehicle, particularly an aircraft, comprising:
a) a multi-axis serial robot (1) comprising a rotatable base axis (4) and a tool center point, and
b) a seat (17) for an operator, wherein the seat (17) is attached to the multi-axis serial robot (1), so that the seat (17) can be moved in space by the multi-axis serial robot (1) for simulation of a real movement,
c) wherein the motion simulator is adapted to simulate a long-lasting acceleration or deceleration by generating a centrifugal force acting on the operator,
**characterized in that**
d) the seat (17) is attached to the tool center point of the multi-axis serial robot (1) by an additional seat axis (11, 12, 14-16), wherein the seat axis (11, 12, 14-16) allows a movement of the seat (17) relative to the tool center point of the multi-axis serial robot (1), and
e) the seat axis (11, 12, 14-16) allows at least a rotation of the seat (17) in the sagittal plane of the operator in the seat (17), and
f) the seat axis (11, 12, 14-16) allows a rotary movement of at least 90° in the sagittal plane of the operator, in the seat (17), and
g) the seat axis (11, 12, 14-16) comprises a curved guide rail (12) and a carriage (11) which is movable along the guide rail (12), and
h) the carriage (11) is attached to the tool center point of the multi-axis serial robot (1) and the guide rail (12) is attached to the seat (17), so that the seat (17) is movable relative to the tool center point of the multi-axis serial robot (1).

2. Motion simulator according to claim 1, wherein the rotatable base axis (4) of the multi-axis serial robot (1) is indefinitely rotatable in order to simulate an acceleration by generating a centrifugal force caused by a rotation of the seat (17) around the base axis (4) of the multi-axis serial robot (1).

3. Motion simulator according to claim 2, wherein the rotatable base axis (4) comprises
a) a slip ring making an electrical connection between rotatable parts of the rotatable axis, and/or
b) a rotary feedthrough making a pneumatic or hydraulic connection between rotatable parts of the rotatable base axis (4).

4. Motion simulator according to any of the preceding claims, further comprising a linear axis (19) wherein the multi-axis serial robot (1) is movable along the linear axis (19), so that the work space of the multi-axis serial robot (1) is expanded thereby making the simulation more realistic.

5. Motion simulator according to claim 4, wherein the linear axis (19) allows a linear movement of the multi-axis serial robot (1) of more than 2m, 4m, 6m, 8m or even more than 10m.

6. Motion simulator according to any of the preceding claims, wherein
a) the guide rail (12) is substantially L-shaped, C-shaped, circular, elliptical or O-shaped, and/or
b) the guide rail (12) along with the seat (17) is rotatable around a vertical axis.

7. Motion simulator according to any of the preceding claims, wherein
a) the seat (17) is arranged in a cabin (13), and/or
b) the cabin (13) is closed so that the operator does not perceive any tilt of the cabin (13) relative to the real world, and/or
c) the cabin (13) comprises at least one visual display, particularly a projection display and/or a stereoscopic display, and/or
d) the cabin (13) resembles the cabin or cockpit of the vehicle to be simulated, particularly a real helicopter.

8. Motion simulator according to any of the preceding claims, further comprising
a) a hardware limit stop limiting the motion space of the multi-axis serial robot (1) to avoid a collision, and/or
b) a software limit stop limiting the motion space of the multi-axis serial robot (1) to avoid a collision, and/or
c) a multi-step safety arrangement comprising software end stops in an operating program, software end stops in a robot controller and hardware end stops in the multi-axis serial robot (1).

9. Motion simulator according to any of the preceding claims, wherein the base axis (4) is rotatable around a vertical axis.

10. Method for simulating a motion of a vehicle, particularly an aircraft, by means of a multi-axis serial robot (1) comprising a tool center point and carrying a seat (17), comprising the following steps:
a) Placing an operator in the seat (17),
b) Moving the seat (17) along with the operator in space to simulate a real movement of the operator,
c) wherein long-lasting accelerations or decelerations are simulated by generating a centrifugal force acting on the operator,
**characterized by** the following step:
d) Rotating the seat (17) in the sagittal plane of the operator in the seat (17) relative to the tool center point of the multi-axis serial robot (1), wherein
d1) the seat (17) is attached to the tool center point of the multi-axis serial robot (1) by an additional seat axis (11, 12, 14-16),
d2) the seat axis (11, 12, 14-16) allows the rotation of the seat (17) relative to the tool center point of the multi-axis serial robot (1),
d3) the seat axis (11, 12, 14-16) allows a rotary movement of at least 90° in the sagittal plane of the operator in the seat (17), and
d4) the seat axis (11, 12, 14-16) comprises a curved guide rail (12) and a carriage (11) which is movable along the guide rail (12), and
d4) the carriage (11) is attached to the tool center point of the multi-axis serial robot (1) and the guide rail (12) is attached to the seat (17), so that the seat (17) is movable relative to the tool center point of the multi-axis serial robot (1).

11. Method according to claim 10, wherein the rotatable base axis (4) is rotated by more than 2, 3, 4, 6 or 8 revolu tions to simulate a correspondingly long-lasting acceleration or deceleration.

12. Method according to claims 10 or 11, further comprising the following step:
Moving the multi-axis serial robot (1) along at least one linear axis (19) to expand the work space of the multi-axis serial robot (1) thereby making the simulation more realistic.

13. Method according to any of claims 10 to 12, further comprising the following steps
a) Aligning the seat (17) with its back rest towards the rotation axis (A) of the rotatable base axis (4) in order to simulate a ventrally directed deceleration or a dorsally directed acceleration, and/or
b) Aligning the seat (17) with its front side towards the rotation axis (A) of the rotatable base axis (4) in order to simulate a ventrally directed acceleration or a dorsally directed deceleration, and/or
c) Aligning the seat (17) with its seating area towards the rotation axis (A) of the rotatable base axis (4) in order to simulate a cranially directed acceleration or a caudally directed deceleration, and/or
d) Aligning the seat (17) with its upper side towards the rotation axis (A) of the rotatable base axis (4) in order to simulate a caudally directed acceleration or a cranially directed deceleration.

## Patentansprüche

1. Bewegungssimulator zur Simulation einer Bewegung eines Fahrzeugs, insbesondere eines Luftfahrzeugs, umfassend:
a) einen mehrachsigen seriellen Roboter (1), der eine drehbare Basisachse (4) und einen Werkzeugreferenzpunkt aufweist, und
b) einen Sitz (17) für einen Bediener, wobei der Sitz (17) an dem mehrachsigen seriellen Roboter (1) angebracht ist, so dass der Sitz (17) von dem mehrachsigen seriellen Roboter (1) für die Simulation einer realen Bewegung im Raum bewegt werden kann,
c) wobei der Bewegungssimulator angepasst ist, um eine langdauernde Beschleunigung oder Verzögerung durch die Erzeugung einer auf den Bediener wirkenden Zentrifugalkraft zu simulieren,
**dadurch gekennzeichnet, dass**
d) der Sitz (17) durch eine zusätzliche Sitzachse (11, 12, 14-16) an dem Werkzeugreferenzpunkt des mehrachsigen seriellen Roboters (1) befestigt ist, wobei die Sitzachse (11, 12, 14-16) eine Bewegung des Sitzes (17) relativ zu dem Werkzeugreferenzpunkt des mehrachsigen seriellen Roboters (1) erlaubt, und
e) die Sitzachse (11, 12, 14-16) zumindest eine Rotation des Sitzes (17) in der Sagittalebene des Bedieners in dem Sitz (17) ermöglicht, und
f) die Sitzachse (11, 12, 14-16) eine Drehbewegung des Bedieners in dem Sitz (17) von mindestens 90° in der Sagittalebene ermöglicht, und
g) die Sitzachse (11, 12, 14-16) eine gekrümmte Führungsschiene (12) und einen Schlitten (11) aufweist, der entlang der Führungsschiene (12) beweglich ist, und
h) der Schlitten (11) an dem Werkzeugreferenzpunkt des mehrachsigen seriellen Roboters (1) und die Führungsschiene (12) an dem Sitz (17) angebracht ist, sodass der Sitz (17) relativ zu dem Werkzeugreferenzpunkt des mehrachsigen seriellen Roboters (1) beweglich ist.

2. Bewegungssimulator gemäß Anspruch 1, wobei die drehbare Basisachse (4) des mehrachsigen seriellen Roboters (1) unbegrenzt drehbar ist, um eine Beschleunigung durch die Erzeugung einer Zentrifugalkraft zu simulieren, die durch eine Drehung des Sitzes (17) um die Basisachse (4) des mehrachsigen seriellen Roboters (1) erzeugt wird.

3. Bewegungssimulator gemäß Anspruch 2, wobei die drehbare Basisachse (4) aufweist:
a) einen Schleifring, der eine elektrische Verbindung herstellt zwischen drehbaren Teilen der drehbaren Achse, und/oder
b) eine Drehdurchführung, die eine pneumatische oder hydraulische Verbindung zwischen drehbaren Teilen der drehbaren Basisachse (4) herstellt.

4. Bewegungssimulator gemäß einem der vorangehenden Ansprüche, weiterhin umfassend eine Linearachse (19), wobei der mehrachsige serielle Roboter (1) entlang der Linearachse (19) beweglich ist, so dass der Arbeitsraum des mehrachsigen seriellen Roboters (1) erweitert wird, was die Simulation realistischer macht.

5. Bewegungssimulator gemäß Anspruch 4, wobei die Linearachse (19) eine Linearbewegung des mehrachsigen seriellen Roboters (1) von mehr als 2m, 4m, 6m, 8m oder sogar mehr als 10m erlaubt.

6. Bewegungssimulator gemäß einem der vorangehenden Ansprüche, wobei
a) die Führungsschiene (12) im wesentlichen L-förmig, C-förmig, kreisförmig, elliptisch oder O-förmig ist, und/oder
b) die Führungsschiene (12) zusammen mit dem Sitz (17) um eine vertikale Achse drehbar ist.

7. Bewegungssimulator gemäß einem der vorangehenden Ansprüche, wobei
a) der Sitz (17) in einer Kabine (13) angeordnet ist, und/oder
b) die Kabine (13) geschlossen ist, so dass der Bediener keine Neigung der Kabine (13) relativ zu der realen Welt wahrnimmt, und/oder
c) die Kabine (13) mindestens ein visuelles Display aufweist, insbesondere ein Projektionsdisplay und/oder ein stereoskopisches Display, und/oder
d) die Kabine (13) in ihrem Aussehen der Kabine oder einem Cockpit des zu simulierenden Fahrzeugs ähnelt, insbesondere eines realen Hubschraubers.

8. Bewegungssimulator gemäß einem der vorangehenden Ansprüche, weiterhin umfassend
a) einen Hardwareanschlag, der den Bewegungsraum des mehrachsigen seriellen Roboters (1) begrenzt, um eine Kollision zu vermeiden, und/oder
b) einen Softwareanschlag, der den Bewegungsraum des mehrachsigen seriellen Roboters (1) begrenzt, um eine Kollision zu vermeiden und/oder
c) eine mehrschrittige Sicherheitsanordnung, die in einem Bedienungsprogramm Softwareanschläge, in einem Roboter-Controller Softwareanschläge und in dem mehrachsigen seriellen Roboter Hardwareanschläge aufweist.

9. Bewegungssimulator gemäß einem der vorangehenden Ansprüche, wobei die Basisachse (4) um eine vertikale Achse drehbar ist.

10. Verfahren zur Simulation einer Bewegung eines Fahrzeugs, insbesondere eines Luftfahrzeugs, mittels eines mehrachsigen seriellen Roboters (1), der einen Werkzeugreferenzpunkt aufweist und einen Sitz (17) trägt, umfassend die folgenden Schritte:
a) Platzieren eines Bedieners in dem Sitz (17),
b) Bewegen des Sitzes (17) mit dem Bediener im Raum zur Simulation einer realen Bewegung des Bedieners,
c) wobei langandauernde Beschleunigungen oder Verzögerungen durch die Erzeugung einer auf den Bediener wirkenden Zentrifugalkraft simuliert werden,
**gekennzeichnet durch** den folgenden Schritt:
d) Drehen des Sitzes (17) in der Sagittalebene des Bedieners in dem Sitz (17) relativ zu dem Werkzeugreferenzpunkt des mehrachsigen seriellen Roboters (1), wobei
d1) der Sitz (17) mittels einer zusätzlichen Sitzachse (11, 12, 14-16) an dem Werkzeugreferenzpunkt des mehrachsigen seriellen Roboters (1) angebracht ist,
d2) die Sitzachse (11, 12, 14-16) die Rotation des Sitzes (17) relativ zu dem Werkzeugreferenzpunkt des mehrachsigen seriellen Roboters (1) ermöglicht,
d3) die Sitzachse (11, 12, 14-16) eine Rotationsbewegung von mindestens 90° in der Sagittalebene des Bedieners in dem Sitz (17) ermöglicht, und
d4) die Sitzachse (11, 12, 14-16) eine gekrümmte Führungsschiene (12) und einen Schlitten (11) aufweist, der entlang der Führungsschiene (12) beweglich ist, und
d4) der Schlitten (11) an dem Werkzeugreferenzpunkt des mehrachsigen seriellen Roboters (1) angebracht ist und die Führungsschiene (12) an dem Sitz (17) angebracht ist, so dass der Sitz (17) relativ zu dem Werkzeugreferenzpunkt des mehrachsigen seriellen Roboters (1) beweglich ist.

11. Verfahren gemäß Anspruch 10, wobei die drehbare Basisachse (4) um mehr als 2, 3, 4, 6 oder 8 Umdrehungen gedreht wird, um eine entsprechend langdauernde Beschleunigung oder Verzögerung zu simulieren.

12. Verfahren gemäß Anspruch 10 oder 11, weiterhin umfassend den folgenden Schritt:
Bewegen des mehrachsigen seriellen Roboters (1) entlang mindestens einer Linearachse (19), um den Arbeitsraum des mehrachsigen seriellen Roboters (1) zu erweitern, was die Simulation realistischer macht.

13. Verfahren gemäß einem der Ansprüche 10 bis 12, weiterhin umfassend die folgenden Schritte:
a) Ausrichten des Sitzes (17) mit seiner Rückenlehne zur Rotationsachse (A) der drehbaren Basisachse (4), um eine ventral ausgerichtete Verzögerung oder eine dorsal ausgerichtete Beschleunigung zu simulieren, und/oder
b) Ausrichten des Sitzes (17) mit seiner Vorderseite in Richtung der Rotationsachse (A) der drehbaren Basisachse (4), um eine ventral ausgerichtete Beschleunigung oder eine dorsal ausgerichtete Verzögerung zu simulieren, und/oder
c) Ausrichten des Sitzes (17) mit seinem Sitzbereich in Richtung auf die Rotationsachse (A) der drehbaren Basisachse (4), um eine cranial ausgerichtete Beschleunigung oder eine caudal ausgerichtete Verzögerung zu simulieren, und/oder
d) Ausrichten des Sitzes (17) mit seiner Oberseite in Richtung zu der Rotationsachse (A) der drehbaren Basisachse (4), um eine caudal ausgerichtete Beschleunigung oder einer cranial ausgerichtete Verzögerung zu simulieren.

## Revendications

1. Simulateur de mouvement pour simuler un mouvement d'un véhicule, particulièrement d'un aéronef, comprenant :
a) un robot série multiaxial (1) comprenant un axe de base rotatif (4) et un point d'effecteur, et
b) un siège (17) pour un opérateur, dans lequel le siège (17) est raccordé au robot série multiaxial (1), pour que le siège (17) puisse être déplacé dans l'espace par le robot série multiaxial (1) pour simulation d'un mouvement réel,
c) dans lequel le simulateur de mouvement est adapté pour simuler une accélération ou décélération prolongée en générant une force centrifuge agissant sur l'opérateur,
**caractérisé en ce que**
d) le siège (17) est raccordé au point d'effecteur du robot série multiaxial (1) par un axe de siège supplémentaire (11, 12, 14-16), dans lequel l'axe de siège (11, 12, 14-16) permet un mouvement du siège (17) par rapport au point d'effecteur du robot série multiaxial (1), et
e) l'axe de siège (11, 12, 14-16) permet au moins une rotation du siège (17) dans le plan sagittal de l'opérateur dans le siège (17), et
f) l'axe de siège (11, 12, 14-16) permet un mouvement rotatif d'au moins 90° dans le plan sagittal de l'opérateur dans le siège (17), et
g) l'axe de siège (11, 12, 14-16) comprend un rail de guidage incurvé (12) et un chariot (11) qui est mobile le long du rail de guidage (12), et
h) le chariot (11) est raccordé au point d'effecteur du robot série multiaxial (1) et le rail de guidage (12) est raccordé au siège (17), pour que le siège (17) soit mobile par rapport au point d'effecteur du robot série multiaxial (1).

2. Simulateur de mouvement selon la revendication 1, dans lequel l'axe de base rotatif (4) du robot série multiaxial (1) est indéfiniment rotatif afin de simuler une accélération en générant une force centrifuge engendrée par une rotation du siège (17) autour de l'axe de base (4) du robot série multiaxial (1).

3. Simulateur de mouvement selon la revendication 2, dans lequel l'axe de base rotatif (4) comprend :
a) une bague collectrice réalisant une connexion électrique entre des parties rotatives de l'axe rotatif, et/ou
b) un passage d'alimentation rotatif réalisant une liaison pneumatique ou une liaison hydraulique entre des parties rotatives de l'axe de base rotatif (4).

4. Simulateur de mouvement selon l'une quelconque des revendications précédentes, comprenant en outre un axe linéaire (19) dans lequel le robot série multiaxial (1) est mobile le long de l'axe linéaire (19), pour que l'espace de travail du robot série multiaxial (1) soit agrandi, rendant ainsi la simulation plus réaliste.

5. Simulateur de mouvement selon la revendication 4, dans lequel l'axe linéaire (19) permet un mouvement linéaire du robot série multiaxial (1) de plus de 2 m, 4 m, 6 m, 8 m voire même plus de 10 m.

6. Simulateur de mouvement selon l'une quelconque des revendications précédentes, dans lequel
a) le rail de guidage (12) présente sensiblement une forme de L, une forme de C, circulaire, elliptique ou une forme de O, et/ou
b) le rail de guidage (12), conjointement avec le siège (17), est rotatif autour d'un axe vertical.

7. Simulateur de mouvement selon l'une quelconque des revendications précédentes, dans lequel
a) le siège (17) est agencé dans une cabine (13), et/ou
b) la cabine (13) est fermée pour que l'opérateur ne ressente aucune inclinaison de la cabine (13) par rapport au monde réel, et/ou
c) la cabine (13) comprend au moins un écran d'affichage visuel, particulièrement un écran d'affichage à projection et/ou un écran d'affichage stéréoscopique, et/ou
d) la cabine (13) ressemble à la cabine ou au cockpit du véhicule dont la simulation doit être réalisée, particulièrement un hélicoptère réel.

8. Simulateur de mouvement selon l'une quelconque des revendications précédentes, comprenant en outre
a) une butée de fin de course matérielle limitant l'espace de mouvement du robot série multiaxial (1) pour éviter une collision, et/ou
b) une butée de fin de course logicielle limitant l'espace de mouvement du robot série multiaxial (1) pour éviter une collision, et/ou
c) un agencement de sécurité à multi-étage comprenant des butées de fin de course logicielles dans un programme d'exécution, des butées de fin de course logicielles dans un système de commande du robot et des butées de fin de course matérielles dans le robot série multiaxial (1).

9. Simulateur de mouvement selon l'une quelconque des revendications précédentes, dans lequel l'axe de base (4) est rotatif autour d'un axe vertical.

10. Procédé pour simuler un mouvement d'un véhicule, particulièrement d'un aéronef, au moyen d'un robot série multiaxial (1) comprenant un point d'effecteur et embarquant un siège (17), comprenant les étapes suivantes :
a) le positionnement d'un opérateur dans le siège (17),
b) le déplacement du siège (17) conjointement avec l'opérateur dans l'espace pour simuler un mouvement réel de l'opérateur,
c) dans lequel des accélérations ou décélérations prolongées sont simulées en générant une force centrifuge agissant sur l'opérateur,
**caractérisé par** l'étape suivante :
d) la rotation du siège (17) dans le plan sagittal de l'opérateur dans le siège (17) par rapport au point d'effecteur du robot série multiaxial (1), dans lequel
d1) le siège (17) est raccordé au point d'effecteur du robot série multiaxial (1) par un axe de siège supplémentaire (11, 12, 14-16),
d2) l'axe de siège (11, 12, 14-16) permet la rotation du siège (17) par rapport au point d'effecteur du robot série multiaxial (1),
d3) l'axe de siège (11, 12, 14-16) permet un mouvement rotatif d'au moins 90 ° dans le plan sagittal de l'opérateur dans le siège (17), et
d4) l'axe de siège (11, 12, 14-16) comprend un rail de guidage incurvé (12) et un chariot (11) qui est mobile le long du rail de guidage (12), et
d4) le chariot (11) est raccordé au point d'effecteur du robot série multiaxial (1) et le rail de guidage (12) est raccordé au siège (17), pour que le siège (17) soit mobile par rapport au point d'effecteur du robot série multiaxial (1).

11. Procédé selon la revendication 10, dans lequel l'axe de base rotatif (4) tourne de plus de 2, 3, 4, 6 ou 8 révolutions pour simuler une accélération ou décélération proportionnellement prolongée.

12. Procédé selon la revendication 10 ou 11, comprenant en outre l'étape suivante :
le déplacement du robot série multiaxial (1) le long d'au moins un axe linéaire (19) pour agrandir l'espace de travail du robot série multiaxial (1), rendant ainsi la simulation plus réaliste.

13. Procédé selon l'une quelconque des revendications précédentes 10 à 12, comprenant en outre les étapes suivantes
a) l'alignement du siège (17) avec son dossier vers l'axe de rotation (A) de l'axe de base rotatif (4) afin de simuler une décélération dirigée de façon ventrale ou une accélération dirigée de façon dorsale, et/ou
b) l'alignement du siège (17) avec son côté avant vers l'axe de rotation (A) de l'axe de base rotatif (4) afin de simuler une accélération dirigée de façon ventrale ou une décélération dirigée de façon dorsale, et/ou
c) l'alignement du siège (17) avec son assise vers l'axe de rotation (A) de l'axe de base rotatif (4) afin de simuler une accélération dirigée de façon crânienne ou une décélération dirigée de façon caudale, et/ou
d) l'alignement du siège (17) avec son côté supérieur vers l'axe de rotation (A) de l'axe de base rotatif (4) afin de simuler une accélération dirigée de façon caudale ou une décélération dirigée de façon crânienne.
